# EUROPÄISCHE PATENTANMELDUNG

(11) **EP 0 769 529 A1**
(43) Veröffentlichungstag der Anmeldung: **23.04.1997**
(21) Anmeldenummer: 96115879.7
(22) Anmeldetag: 03.10.1996
(51) Int. Cl.: C08L 97/02

(54) **Zusammensetzung aus unterschiedlichen Materialien und Verfahren zum Spritzpressen von thermoplastischen, biologisch abbaubaren Gegenständen**

(30) Priorität: 20.10.1995 IT TO950856
(71) Anmelder: MASTER S.r.l., I-10152 Turin (IT)
(72) Erfinder: Bertolino, Giorgio, 10152 Turin (IT)
(74) Vertreter: Richter, Werdermann & Gerbaulet

(57) **Zusammenfassung**

Zusammensetzung aus unterschiedlichen Materialien und Verfahren zum Spritzpressen von thermoplastischen, biologisch abbaubaren Gegenständen, welches einen Bearbeitungsprozeß zur Vorbereitung und Mischung der folgenden verschiedenen Komponenten umfaßt:
Stärke, ölpolymerisierte Kunstharze, Sägemehl und Zusätze, in unterschiedlichen Mengen und dem Ziel, eine preßbare Mischung für die Fertigung unterschiedlicher, unter der Erde biologisch abbaubarer Gegenstände zu liefern.

Die nicht biologische Abbaubarkeit vieler üblicher Gebrauchsgegenstände und Formteile aus thermoplastischem Material ist eines der schwerwiegenden Probleme der Umweltverschmutzung.

## Beschreibung

Die Erfindung betrifft eine Zusammensetzung verschiedener Materialien und ein Verfahren zur Erzeugung einer thermoplastischen Mischung für das Spritzpressen allgemeiner Gebrauchsgegenstände, die unter der Erde die gleichen biologischen Abbaueigenschaften wie Holz aufweisen.

Obwohl diese Zusammensetzung bezüglich Form und Gebrauch der herzustellenden Gegenstände über keine Einschränkungen verfügt, ist sie doch für die Herstellung von Särgen vorgesehen.

Die nicht biologische Abbaubarkeit vieler üblicher Gebrauchsgegenstände und Formteile aus thermoplastischem Material ist eines der schwerwiegenden Probleme der Umweltverschmutzung.

Bekanntlich sind Särge prismatisch-rechtwinklig oder sechseckig. Allgemein werden sie aus formgefrästen Holzteilen zusammengebaut, welche mittels Schrauben bzw. Klebstoff winklig ineinander verkantet werden. Die Außenoberfläche dieser Fabrikate wird häufig mit angebrachten oder eingelegten Zierteilen versehen. Die Herstellungskosten dieser Särge sind meist hoch und hängen sowohl von der Qualität des mehr oder weniger hochwertigen Holzes als auch von der dazu benötigten Handarbeit zur Herstellung des gesamten Endproduktes ab. Dazu gehören die folgenden Arbeiten: Formfräsen, Zusammenbau, Feinarbeiten und Endlackierung.

Ziel dieser Erfindung ist die Herstellung einer Zusammensetzung verschiedener Komponenten zu einer thermoplastischen Mischung für das Fertigen von Formteilen allgemeiner Natur, insbesondere für die Herstellung von Särgen. Diese werden aus zwei einteiligen Stücken, Kasten und Deckel, hergestellt und kosten deutlich weniger als die traditionellen Särge aus Naturholz.

Das beschriebene Ziel wird mit einer pressbaren Mischung erreicht, welche dem Holz ähnliche physisch-mechanische und biologisch abbaubare Eigenschaften aufweist.

Anbei ein Beispiel einer Komponentenmischung, mit welcher im Rahmen von Experimenten Gegenstände gepreßt wurden, und die sich als biologisch abbaubar erwiesen hat:

| | |
|---|---|
| Stärke | 12 % - 18 % |
| Ölpolymerisierte Kunstharze | 34 % - 45 % |
| Sägemehl | 52 % - 55 % |
| Zusätze | 2 % - 10 % . |

Die Komponenten und deren Anteile im Beispiel oben sind im Patent nicht vorgegeben. Es können sowohl chemisch als auch physisch davon abweichende Komponenten eingesetzt werden. Wichtig ist dabei nur, daß sie einen gewissen Prozentsatz Stärke enthalten und in der Lage sind, preßbare Mischungen zur Herstellung unter der Erde wie Holz biologisch abbaubarer Gegenstände zu liefern, und daß die hergestellten Gegenstände wie bisher über einen gewissen Härtegrad verfügen, um mit normalem Holz- und Lackierwerkzeug bearbeitet werden zu können.

Das Zubereitungsverfahren der verwendeten Komponenten und die Herstellung der erwähnten Mischung erfolgt folgenderweise:
- Der Anteil Holz wird bis auf einen Wert von weniger als 1,5 mm granuliert und daraufhin getrocknet.
- Die Stärke, mit einer Ausgangsfeuchtigkeit von ca. 12 %, wird ebenfalls getrocknet.
- Die ölpolymerisierten Kunstharze müssen mikronisiert werden. Das Holz, die Stärke, die Kunstharze und die Zusätze werden anschließend gewogen und in einen Turbomischer eingegeben, wo sie während ca. 4 - 5 Minuten behandelt werden.

Die somit getrocknete Mischung wird in einen Extruder geleert und daraufhin granuliert. Diese Granulation wird dann in eine Spritzpresse zur thermoplastischen Formpressung eingeführt, welche die Mischung erneut plastifiziert und unter hohem Druck in eine dafür bestimmte Form spritzt, aus welcher nach erfolgter Abkühlung die Endprodukte herausgehoben werden können.

Die Vorteile der beschriebenen Methode und Zusammensetzung sind in jedem Fall zahlreich:
- Jeder Gegenstand, der auf diese Weise aus der Form gehoben wird, ist komplett fertig, kann jedoch mit normalem Tischlerwerkzeug noch weiter bearbeitet und normal lackiert werden.
- Eventuelle Zierteile auf der Außenoberfläche sind nicht nur ausführbar bzw. anbringbar, sondern können auch während dem Preßprozeß durchgeführt und mittels Auswechseln der entsprechenden Formteile verändert werden.
- Der Bearbeitungsprozeß ist komplett automatisierbar.
- Eventuelle Mangelware bzw. Bearbeitungsausschuß kann vollkommen wiederverwertet werden, was eine bedeutende Kosteneinsparung beim Endprodukt zur Folge hat.
- Da die Särge aus nur zwei einteiligen Stücken bestehen, fertigt man bei deren Herstellung einen dichten Kasten ohne Verbindungsstücke zwischen den Boden- und Deckelteilen.

Ein weiterer und nicht unwichtiger Vorteil, der ausführlich experimentiert und geprüft wurde, besteht darin, daß die Gegenstände, die gemäß Beschreibung hergestellt wurden, unbeschränkt gelagert werden können. Unter der Erde bauen sie sich biologisch schneller ab als die gleichwertigen und gleichgroßen Produkte aus Holz.

Der Umstand, daß das Holz durch ein anderes Material ersetzt wird und dadurch weniger Bäume gefällt werden müssen, ist ein weiterer und nicht unbedeutender Vorteil, der sich mit dem Einsatz dieser Zusammensetzung und des entsprechenden Verfahrens ergibt. Der dazu erforderliche Holzanteil kann durch die folgenden Elemente abgedeckt werden: Sägemehl, industrielle Tischlerabfälle, Restholz von Baumschnitt, alte, ungebrauchte Möbel, Verpackungsmaterial und sogar landwirtschaftliche Restprodukte wie Stroh, Kleie bzw. andere holz- bzw. zellulosehaltige Produkte, die zur Verfügung stehen und kostengünstig sind.

## Patentansprüche

1. Zusammensetzung aus unterschiedlichen Materialien für unter der Erde biologisch abbaubare Gegenstände, dadurch gekennzeichnet, daß die Zusammensetzung folgende Komponenten enthält:
| | |
|---|---|
| - Stärke | 12 % - 18 % |
| - Ölpolymerisierte Kunstharze | 34 % - 45 % |
| - Sägemehl | 52 % - 55 % |
| - Zusätze | 2 % - 10 %. |

2. Zusammensetzung nach Anspruch 1, insbesondere geeignet zur Verwendung und zur Herstellung von biologisch abbaubaren Formteilen, insbesondere Särgen.

3. Zusammensetzung nach Anspruch 1 oder 2,
insbesondere zur Verwendung für die Herstellung zweier einteiliger Sargstücke, Kasten und Deckel.

4. Zusammensetzung nach einem der oben beschriebenen Ansprüche, dadurch gekennzeichnet, daß das Holz und die Kunstharze durch Abfall- oder Ausschußware ersetzbar sind.

5. Verfahren zur Erzeugung einer thermoplastischen Mischung für das Spritzpressen von unter der Erde biologisch abbaubaren Gegenständen, dadurch gekennzeichnet, daß die Mischung folgende Komponenten enthält:
| | |
|---|---|
| - Stärke | 12 % - 18 % |
| - Ölpolymerisierte Kunstharze | 34 % - 45 % |
| - Sägemehl | 52 % - 55 % |
| - Zusätze | 2 % - 10 %. |

6. Verfahren zur Erzeugung der thermoplastischen Mischung nach Anspruch 5, gekennzeichnet durch einen Bearbeitungsprozeß, mit dem die Zusammensetzung in zwei Phasen plastifiziert wird und anschließend die folgenden Phasen durchläuft:
- Granulierung der Holzteile auf einen Granulierwert von weniger als 1,5 mm und anschließende Trocknung der Granulate;
- komplette Trocknung der Stärke;
- Mikronisierung der ölpolymerisierten Kunstharze;
- Vermischung mit den anderen genannten Komponenten;
- Einführen der Mischung in einen Turbomischer für ca. 4 - 5 Minuten;
- darauffolgende Einfüllung in eine Fließdruckpresse oder Extruder;
- die Mischung wird nun in Granulate verringert;
- dieses Granulat wird schließlich einer Hochdruckpresse zur thermoplastischen Spritzpressung einteiliger Fabrikate zugeführt.

7. Verfahren nach Anspruch 5 oder 6 zur Herstellung von biologisch abbaubaren Formteilen, insbesondere Särgen.

8. Verfahren nach Anspruch 5 bis 7, insbesondere geeignet zur Verwendung für die Herstellung zweier einteiliger Sargstücke, Kasten und Deckel.

9. Verfahren nach einem der oben beschriebenen Ansprüche, dadurch gekennzeichnet, daß das Holz und die Kunstharze durch Abfall- oder Ausschußware ersetzbar sind.
